# FASCICULE DE BREVET EUROPEEN

(11) **EP 1 542 172 B1**
(45) Date de publication et mention de la délivrance du brevet: **25.09.2013**
(21) Numéro de dépôt: 05101242.5
(22) Date de dépôt: 13.04.2001
(51) Int. Cl.: G07C 9/00, B60R 25/00

(54) **Circuit électronique pour alimentation de bobine émettrice**
Elektronische Schaltung zum Versorgen einer Sendespule
Electronic circuit for supplying a transmitting coil

(30) Priorité: 19.04.2000 FR 0005044
(43) Date de publication de la demande: 15.06.2005
(62) Demande divisionnaire de: 01400961.7
(73) Titulaire: Valeo Sécurité Habitacle, 94046 Créteil Cedex (FR)
(72) Inventeur: Bouleisteix, Xavier, c/o Valeo Securite Habitacle, 94042, CRETEIL (FR)
(74) Mandataire: Jacquot, Ludovic R. G.

(56) Documents cités:
- WO-A-00/10135
- FR-A- 2 814 130
- US-A- 5 524 044
- PATENT ABSTRACTS OF JAPAN vol. 1998, no. 02, 30 janvier 1998 (1998-01-30) & JP 09 284060 A (YOKOWO CO LTD), 31 octobre 1997 (1997-10-31)

## Description

L'invention concerne un circuit électronique destiné à alimenter une bobine émettrice de champ magnétique, ayant une première borne d'entrée pour recevoir une tension d'alimentation, une seconde borne d'entrée pour recevoir un signal de commande périodique dans une gamme de fréquence prédéfinie, une borne de sortie pour générer un courant de sortie dans ladite bobine émettrice connectée entre ladite borne de sortie et une masse, de manière à convertir ledit signal de commande périodique en un champ magnétique périodique émis par la bobine.

Un tel circuit est plus particulièrement destiné à alimenter une bobine émettrice de champ magnétique servant d'antenne dans un système d'accès dit « mains libres » à une enceinte fermée, cette enceinte pouvant être par exemple un véhicule automobile. Un tel système peut encore autoriser ou interdire le démarrage d'un véhicule. Un tel système comporte généralement un dispositif de reconnaissance ayant une antenne émettrice sous la forme d'une bobine, qui émet un champ magnétique périodique pour effectuer un échange de données avec un organe d'identification à authentifier. Classiquement, le circuit d'alimentation de la bobine émettrice qui est alimenté par une batterie du véhicule reçoit un signal de commande ayant une fréquence donnée et convertit ce signal en un courant qui traverse la bobine pour que celle-ci émette un champ magnétique ayant la même fréquence que le signal de commande.

On connait dans l'art antérieur JP 09 284 060 un tel circuit électronique destiné à alimenter une antenne émettrice de champ magnétique disposée dans un véhicule.

Dans l'art antérieur concernant les systèmes d'accès « mains libres », on constate généralement qu'il est difficile d'obtenir une transmission de données de bonne qualité entre le dispositif de reconnaissance et l'organe d'identification. En effet, le diagramme d'émission d'un champ magnétique dans l'air est difficile à maîtriser, compte tenu notamment des perturbations qu'introduit la caisse métallique du véhicule qui influent sur les caractéristiques électriques d'antenne émettrice, et compte tenu de l'emplacement de l'antenne émettrice qui est assujetti à des impératifs ergonomiques.

Une façon de résoudre ce problème consiste à optimiser l'emplacement et la conception de la bobine émettrice pour que le diagramme d'émission soit satisfaisant.

Le défaut de cette solution est qu'elle donne lieu à un surcoût de fabrication du dispositif de reconnaissance.

Le but de l'invention est de remédier à cet inconvénient en proposant un circuit d'alimentation de la bobine émettrice qui améliore la qualité de la transmission de données.

A cet effet, l'invention a pour objet un circuit électronique destiné à alimenter une bobine émettrice de champ magnétique, ayant une première borne d'entrée pour recevoir une tension d'alimentation, une seconde borne d'entrée pour recevoir un signal de commande périodique dans une gamme de fréquence prédéfinie, une borne de sortie pour générer un courant de sortie dans ladite bobine émettrice connectée entre ladite borne de sortie et une masse, de manière à convertir ledit signal de commande périodique en un champ magnétique périodique émis par la bobine, caractérisé en ce que un circuit RLC série est connecté entre ladite borne de sortie et la masse pour former avec la bobine émettrice une antenne accordée.

Avec une telle construction, le champ magnétique émis est sinusoïdal, et sa portée est augmentée, de sorte que la sensibilité d'un récepteur comme un organe d'identification est améliorée.

Selon un mode de réalisation préféré de l'invention dans lequel le circuit d'alimentation comprend un circuit élévateur de tension, pour utiliser une antenne émettrice de champ magnétique ayant un facteur de qualité faible ou présentant des caractéristiques électriques perturbées par la caisse métallique du véhicule, on obtient un dispositif de reconnaissance dont le coût de fabrication global est réduit. En outre, dans ce mode de réalisation, la tension délivrée par le circuit élévateur de tension ne varie pas avec des fluctuations de la tension d'alimentation fournie par une batterie du véhicule pour que le champ magnétique émis ait une portée constante. Dans ce mode de réalisation, la tension délivrée par le circuit élévateur de tension peut être réglée au cours d'une opération d'étalonnage.

Selon un autre mode de réalisation de l'invention, dans lequel le circuit d'alimentation comprend un circuit de commande, l'intensité crête d'un courant qui traverse la bobine émettrice est constante et ne varie pas avec des fluctuations de la tension d'alimentation fournie par la batterie du véhicule pour que le champ magnétique émis par la bobine émettrice ait une portée constante.

Selon encore un autre mode de réalisation particulier dans lequel le circuit d'alimentation comprend un circuit de commande, il est alors possible de modifier volontairement la portée du champ magnétique émis par la bobine émettrice pour que le dispositif de reconnaissance puisse par exemple mieux évaluer la position d'un organe d'identification à authentifier.

L'invention sera maintenant décrite plus en détail, et en référence aux dessins annexés qui en illustrent une forme de réalisation à titre d'exemple non limitatif.

La figure 1 est une représentation schématique d'un premier mode de réalisation du circuit électronique selon l'invention.

La figure 2 est une représentation schématique d'un deuxième mode de réalisation du circuit électronique selon l'invention.

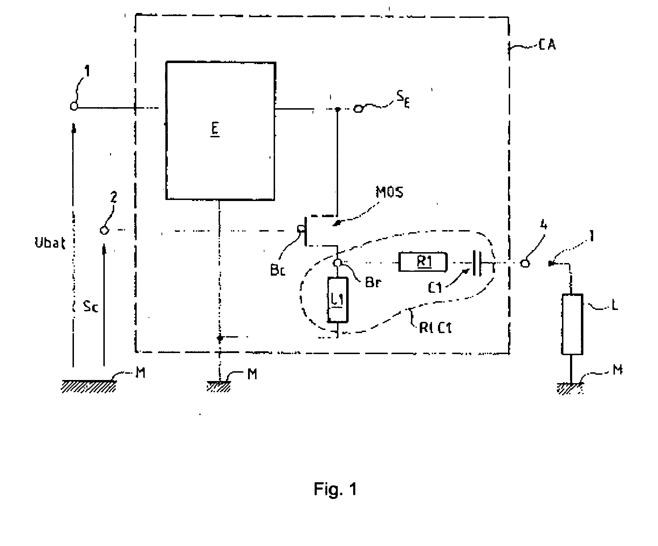

Dans la figure 1, on peut voir un circuit d'alimentation CA selon l'invention comprenant en entrée une première borne d'entrée 1 à laquelle est appliquée une tension d'alimentation Ubat qui est par exemple une tension d'alimentation fournie par une batterie du véhicule, une seconde borne d'entrée 2 qui est destinée à recevoir un signal de commande SC, et en sortie une borne de sortie 4, ce circuit d'alimentation CA étant en outre connecté à une masse électrique M qui pourra par exemple être la masse du véhicule. Ce circuit est destiné à générer un courant I dans une bobine émettrice de champ magnétique L, cette bobine émettrice étant connectée d'une part à la borne de sortie 4 et d'autre part à la masse M.

Dans ce circuit, la borne d'entrée 1 est connectée à un élévateur de tension E qui fournit entre sa borne de sortie Se et la masse M à laquelle il est connecté, une tension constante stable Ve pouvant valoir par exemple 40 Volts. La borne d'entrée 2 est directement connectée à la borne de commande Bc d'un transistor MOS pour que le signal de commande SC pilote ce transistor en commandant son ouverture et sa fermeture. Ce transistor MOS est connecté entre la borne de sortie Se et une borne Br d'un circuit RLC1, de manière à ce que lorsque ce transistor MOS est fermé, la tension entre la borne Br et la masse M vaut Ve. Le circuit RLC1 est un circuit RLC série qui est connecté entre la borne 4 et la masse M. Ce circuit comporte une bobine inductive L1, une résistance R1 et un condensateur C1, la borne Br étant située entre la résistance R1 et la bobine inductive L1.

Dans ce circuit, le transistor qui est piloté par le signal SC applique à la borne Br, une tension périodique, de même période que la période du signal SC et ayant pour amplitude Ve.

D'une façon générale, le signal de commande SC est un signal périodique carré dont la fréquence varie entre 125 kHz et 133 kHz. D'autre part, le circuit RLC constitué du circuit RLC1 et de la bobine L, est dimensionné pour que sa bande passante comprenne les fréquences 125 kHz et 133 kHz. de manière à constituer une antenne accordée dans cette bande passante. De cette façon, la tension périodique qui est appliquée à la borne Br est convertie en un courant périodique I dans la bobine émettrice L qui a une forme sinusoïdale. Ainsi, le signal périodique SC est converti en un champ magnétique sinusoïdal ayant pour période la période du signal SC, qui est émis par la bobine L.

Dans le cas d'une antenne non accordée, le signal magnétique émis a la période du signal de commande SC, mais ce signal magnétique a une allure triangulaire, si bien qu'un récepteur comme un organe d'identification accordé ne récupère que la composante sinusoïdale fondamentale de ce signal triangulaire. Il en découle une sensibilité faible de l'organe d'identification par rapport au signal magnétique.

Dans ce circuit, l'élévateur de tension E élève la tension appliquée à l'antenne accordée à environ 40 Volts, ce qui permet d'utiliser une antenne émettrice de champ magnétique dont le facteur de qualité est moindre ou dont les caractéristiques électriques sont perturbées par l'environnement, pour réduire le coût de fabrication du dispositif de reconnaissance.

D'autre part, cet élévateur de tension E peut jouer le rôle de régulateur en fournissant une tension de 40 Volts, constant et fixe, indépendamment des fluctuations de la tension d'alimentation Ubat qui est délivrée par la batterie, pour que le signal magnétique soit émis selon un diagramme d'émission de portée constante. En effet, il est courant qu'une batterie de véhicule de type 12 Volts ait sa tension qui fluctue entre 10 et 16 Volts, et il est évidemment gênant que ces fluctuations se répercutent sur la portée de l'émission du signal magnétique.

Enfin, dans le cas de l'utilisation d'une antenne accordée ayant un faible facteur de qualité, et donc dans le cas de composants électroniques bon marché qui présentent des dispersions élevées de leurs caractéristiques techniques (valeurs des résistance, capacité et inductances), le circuit élévateur de tension E pourra être étalonné pour que le diagramme d'émission du champ magnétique ne fluctue pas d'un circuit d'alimentation à l'autre. Cet étalonnage pourra par exemple consister à mesurer la tension efficace entre la borne de sortie 4 et la masse M, puis à effectuer un réglage de la tension de sortie Ve pour obtenir une certaine tension efficace souhaitée entre la borne de sortie 4 et la masse M.

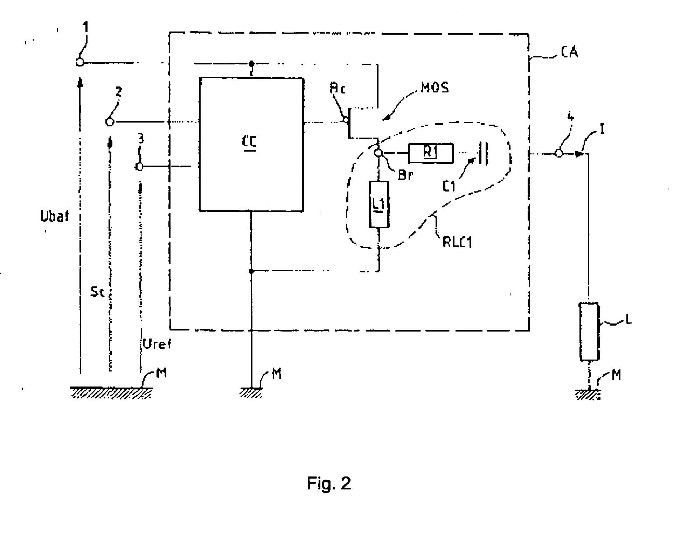

Dans la figure 2, on peut voir un circuit d'alimentation CA comprenant en entrée une première borne d'entrée 1 à laquelle est appliquée une tension d'alimentation Ubat qui est par exemple une tension d'alimentation fournie par une batterie du véhicule, une seconde borne d'entrée 2 qui est destinée à recevoir un signal de commande SC, une troisième borne d'entrée 3 destinée à recevoir un tension de référence Uref, et en sortie une borne de sortie 4, ce circuit d'alimentation CA étant en outre connecté à une masse électrique M qui pourra par exemple être la masse du véhicule. Ce circuit est destiné à générer un courant I dans une bobine émettrice de champ magnétique L, cette bobine émettrice étant connectée d'une part à la borne de sortie 4 et d'autre part à la masse M.

Ce circuit d'alimentation comprend un circuit de commande CC auquel est connectée chaque borne d'entrée 1, 2, 3 et qui génère un signal de commande pour piloter l'état ouvert ou fermé d'un transistor MOS au niveau d'une borne de commande Bc du transistor MOS à laquelle ce circuit de commande CC est connecté. Dans ce circuit, le transistor MOS est connecté entre la borne d'entrée 1 et une borne Br d'un circuit RLC1, ainsi, lorsque ce transistor MOS est fermé, la tension entre Br et la masse M vaut Ubat. Le circuit RLC1 est un circuit RLC série qui est connecté entre la borne 4 et la masse M. Ce circuit comporte une bobine inductive L1, une résistance R1 et un condensateur C1, la borne Br étant située entre la résistance R1 et la bobine inductive L1.

De la même manière que pour le premier circuit d'alimentation, on a ici un circuit qui applique à la borne Br de l'antenne accordée une tension périodique de même période que la période du signal de commande SC, pour générer un courant sinusoïdal dans l'antenne accordée, dans une bande passante située par exemple entre 125 et 133 kHz. Ici, la tension appliquée à la borne Br a pour amplitude la tension d'alimentation Ubat fournie par la batterie. Ainsi, le signal périodique SC est converti en un champ magnétique sinusoïdal ayant pour période la période du signal SC, qui est émis par la bobine L, un tel champ présentant les avantages qui ont été expliqués pour le premier circuit d'alimentation.

Dans ce circuit, le transistor MOS n'est pas directement piloté par le signal SC, mais par un signal ayant la même période que le signal SC, et ayant un rapport cyclique r qui dépend de la tension d'alimentation Ubat et de la tension de référence Uref. Avec un tel agencement, la valeur efficace de la tension qui est appliquée à la borne Br de l'antenne accordée varie avec le rapport cyclique r. Ainsi, le circuit de commande CC modifie la valeur de l'intensité crête du courant I qui passe dans la bobine émettrice L, en modifiant le rapport cyclique r, pour faire varier la portée du champ magnétique qui est émis par cette bobine.

Plus particulièrement, le transistor MOS est fermé pendant une durée Δton et ouvert pendant une durée Δtoff, et le rapport cyclique r qui vaut r = Δton / (Δton + Δtoff) respecte la condition Δton + Δtoff = p.

Dans un mode de réalisation du circuit d'alimentation le rapport cyclique r augmente lorsque Ubat diminue, et diminue lorsque Ubat diminue. Ainsi, la valeur du courant crête ) I dans la bobine L est constante indépendamment des fluctuations de la tension d'alimentation Ubat fournie par la batterie du véhicule, pour que le diagramme d'émission du champ magnétique ait une portée constante indépendamment des fluctuations de la tension d'alimentation Ubat.

Dans un autre mode de réalisation du circuit d'alimentation le rapport cyclique r augmente lorsque la tension Uref augmente et diminue lorsque celle-ci diminue. De cette façon, la valeur crête du courant I dans la bobine L dépend de la valeur de la tension Uref qui est appliquée, ce qui permet de modifier volontairement la portée du diagramme d'émission du champ magnétique. Une telle application peut être très utile pour effectuer de l'émission dite « double puissance » dans laquelle le dispositif de reconnaissance est capable d'émettre selon deux diagrammes d'émission de taille différente, pour localiser la position physique d'un organe de reconnaissance à authentifier.

## Revendications

1. Circuit électronique (CA) destiné à alimenter une antenne émettrice de champ magnétique (L) disposée dans un véhicule, ayant une première borne d'entrée (1) à laquelle est appliquée une tension d'alimentation (Ubat), une seconde borne d'entrée (2) qui est destinée à recevoir un signal de commande périodique (Sc) et une borne de sortie (4), ce circuit d'alimentation (CA) étant connecté à une masse électrique (M), l'antenne émettrice étant connectée d'une part à la borne de sortie (4) et d'autre part à la masse (M), le circuit électronique (CA) comprenant un élévateur de tension (E), un transistor MOS et un circuit RLC série, la borne d'entrée (1) dudit circuit électronique (CA) étant connectée à l'élévateur de tension (E) qui fournit entre sa borne de sortie (Se) et la masse (M) une tension constante, la seconde borne d'entrée (2) étant connectée à la borne de commande du transistor MOS pour que le signal de commande périodique (Sc) pilote le transistor en commandant son ouverture et sa fermeture, **caractérisé en ce que** le transistor MOS est connecté entre ladite borne de sortie (Se) de l'élévateur de tension (E) et une borne (Br) située entre la bobine inductive et la résistance du circuit RLC série, ledit circuit RLC série étant connecté entre la borne de sortie (4) du circuit (CA) et la masse (M) pour former avec la bobine émettrice (L) une antenne accordée.

2. Circuit électronique selon la revendication 1, **caractérisé en ce que** la tension délivrée par l'élévateur de tension est environ égale à 40 Volts.

3. Circuit électronique selon l'une quelconque des revendications précédentes, **caractérisé en ce que** la tension d'alimentation appliquée à la borne d'entrée (1) est délivrée par la batterie du véhicule.

4. Circuit électronique selon l'une quelconque des revendications précédentes, **caractérisé en ce que** la tension de sortie de l'élévateur est réglée afin de compenser les dispersions de l'antenne.

5. Véhicule automobile équipé d'un système d'accès mains libres comprenant un circuit électronique selon l'une des revendications précédentes.

## Patentansprüche

1. Elektronische Schaltung (CA), die dazu bestimmt ist, eine in einem Fahrzeug angeordnete Magnetfeld-Sendeantenne (L) mit Strom zu versorgen, die einen ersten Eingangsanschluss (1), an den eine Versorgungsspannung (Ubat) angelegt wird, einen zweiten Eingangsanschluss (2), der dazu bestimmt ist, ein periodisches Steuersignal (Sc) zu empfangen, und einen Ausgangsanschluss (4) aufweist, wobei diese Versorgungsschaltung (CA) mit einer elektrischen Masse (M) verbunden ist, die Sendeantenne einerseits mit dem Ausgangsanschluss (4) und andererseits mit der Masse (M) verbunden ist, die elektronische Schaltung (CA) einen Spannungserhöher (E), einen MOS-Transistor und eine RLC-Reihenschaltung aufweist, wobei der Eingangsanschluss (1) der elektronischen Schaltung (CA) mit dem Spannungserhöher (E) verbunden ist, der zwischen seinem Ausgangsanschluss (Se) und der Masse (M) eine konstante Spannung liefert, wobei der zweite Eingangsanschluss (2) mit dem Steueranschluss des MOS-Transistors verbunden ist, damit das periodische Steuersignal (Sc) den Transistor durch Steuern seiner Öffnung und seiner Schließung steuert, **dadurch gekennzeichnet, dass** der MOS-Transistor zwischen dem Ausgangsanschluss (Se) des Spannungserhöhers (E) und einem Anschluss (Br) verbunden ist, der sich zwischen der Induktionsspule und dem Widerstand der RLC-Reihenschaltung befindet, wobei die RLC-Reihenschaltung zwischen dem Ausgangsanschluss (4) der Schaltung (CA) und der Masse (M) verbunden ist, um mit der Sendespule (L) eine abgestimmte Antenne zu bilden.

2. Elektronische Schaltung nach Anspruch 1, **dadurch gekennzeichnet, dass** die durch den Spannungserhöher gelieferte Spannung ungefähr gleich 40 Volt ist.

3. Elektronische Schaltung nach einem der vorhergehenden Ansprüche, **dadurch gekennzeichnet, dass** die an den Eingangsanschluss (1) angelegte Versorgungsspannung durch die Batterie des Fahrzeugs geliefert wird.

4. Elektronische Schaltung nach einem der vorhergehenden Ansprüche, **dadurch gekennzeichnet, dass** die Ausgangsspannung des Spannungserhöhers geregelt wird, um die Streuungen der Antenne auszugleichen.

5. Kraftfahrzeug, das mit einem berührungslosen Zugangssystem ausgerüstet ist, das eine elektronische Schaltung nach einem der vorhergehenden Ansprüche aufweist.

## Claims

1. Electronic circuit (CA) designed to supply power to an antenna emitting a magnetic field (L) disposed within a vehicle, having a first input terminal (1) to which a power supply voltage (Ubat) is applied, a second input terminal (2) which is designed to receive a periodic control signal (Sc) and an output terminal (4), this power supply circuit (CA) being connected to an electrical ground (M), the emitting antenna being connected, on the one hand, to the output terminal (4) and, on the other hand, to ground (M), the electronic circuit (CA) comprising a voltage step-up circuit (E), an MOS transistor and an RLC series circuit, the input terminal (1) of the said electronic circuit (CA) being connected to the voltage step-up circuit (E) which supplies a constant voltage between its output terminal (Se) and ground (M), the second input terminal (2) being connected to the control terminal of the MOS transistor so that the periodic control signal (Sc) drives the transistor by controlling its opening and closing, **characterized in that** the MOS transistor is connected between the said output terminal (Se) of the voltage step-up circuit (E) and a terminal (Br) situated between the inductive coil and the resistor of the RLC circuit, the said RLC series circuit being connected between the output terminal (4) of the circuit (CA) and ground (M) so as to form, with the emitting coil (L), a tuned antenna.

2. Electronic circuit according to Claim 1, **characterized in that** the voltage delivered by the voltage step-up circuit is equal to around 40 Volts.

3. Electronic circuit according to any one of the preceding claims, **characterized in that** the supply voltage applied to the input terminal (1) is delivered by the battery of the vehicle.

4. Electronic circuit according to any one of the preceding claims, **characterized in that** the voltage output from the voltage step-up circuit is adjusted in order to compensate for the dispersions of the antenna.

5. Motor vehicle equipped with a hands-free access system comprising an electronic circuit according to one of the preceding claims.
